# EUROPEAN PATENT SPECIFICATION

(11) **EP 1 357 531 B1**
(45) Date of publication and mention of the grant of the patent: **13.06.2007**
(21) Application number: 03076210.8
(22) Date of filing: 25.04.2003
(51) Int. Cl.: G09F 3/04, A47G 7/04

(54) **Hanging basket label collar**
Manschetteförmige Etikette für Hängekorb
Etiquette en forme de collerette pour corbeille suspendue

(30) Priority: 26.04.2002 US 376035 P
(43) Date of publication of application: 29.10.2003
(73) Proprietor: International Master Products Corporation, Montague, Michigan 49437-8517 (US)
(72) Inventor: Minnebo, John Edward, Montague, Michigan 49437-8517 (US)
(74) Representative: Prins, Adrianus Willem

(56) References cited:
- FR-A- 2 734 240
- GB-A- 2 222 291
- US-A- 5 077 936

## Description

### Background Art

Decorative plants are commonly sold in hanging baskets suspended by wires, chains or similar hanging devices. Typically, the hanging devices are gathered or joined at a point above the basket and joined to a hook or similar device to support the basket, as described in US 5,077,936. To provide purchase and care information to the consumer, baskets are often provided with labels displaying a name or characteristics of the plant, as well as care and feeding instructions. Prior art labels are typically in the form of a small rectangular shape or a long thin strip. Such labels are commonly displayed either by inserting the baskets hook through a hole in the label, by passing hanger wires through a hole in the label or wrapping the label around the wire. The label may also be attached directly to the basket.

Visibility of the labels is of paramount importance, since the information on the labels is of critical importance in making a purchasing decision. However, an inherent problem with prior art labels commonly used is that there is limited visibility of the label. At retail, flower baskets are frequently hung from racks above eye level of customers and labels attached to the baskets hook are often difficult to find read. Furthermore, labels attached to the basket hanging wire or directly to the basket are often obscured by foliage, by the time the basket is ready for marketing.

### SUMMARY OF THE INVENTION

These and other problems of the prior art are over come in accordance with the present invention by an improved flower basket labeling arrangement comprised of a collar intended to be supported on support wires, or the like, of the hanging basket. Hanging basket typically have three support wires, each having one end attached to the upper rim of the basket, extending at an angle from the rim to a common position above a central area of the basket, where the wires are joined. A collar in accordance with the present invention is preferably dimensioned such that the collar supported on basket support wires at a position above any foliage in the basket.

The collar is provided with an upper opening and a lower opening. The lower opening is larger than the upper opening to maintain the collar at a desired position on angled support wires supporting the basket. Advantageously, information displayed on the collar supported above plant foliage can be read without being unimpeded by the foliage.

In one specific embodiment of the invention, the collar comprises three substantially equally dimensioned sections and is adapted to be supported on three hanging wires of a flower basket. A middle section of the collar is hingedly connected to two end sections, disposed adjacent to the middle section. Preferably, one of the two end sections is provided with a slotted opening and the other of the end sections is provided with a tab dimensioned to engage the slotted opening.

### BRIEF DESCRIPTION OF THE DRAWING

FIG. 1 is a perspective view of a three-sided label structure incorporating principles of the invention;
FIG. 2 is an exploded view of the label structure of FIG. 1; and
FIG. 3 is a perspective view of the label structure of FIGS. 1 and 2 supported on the hanging wires of a hanging basket.

### DETAILED DESCRIPTION

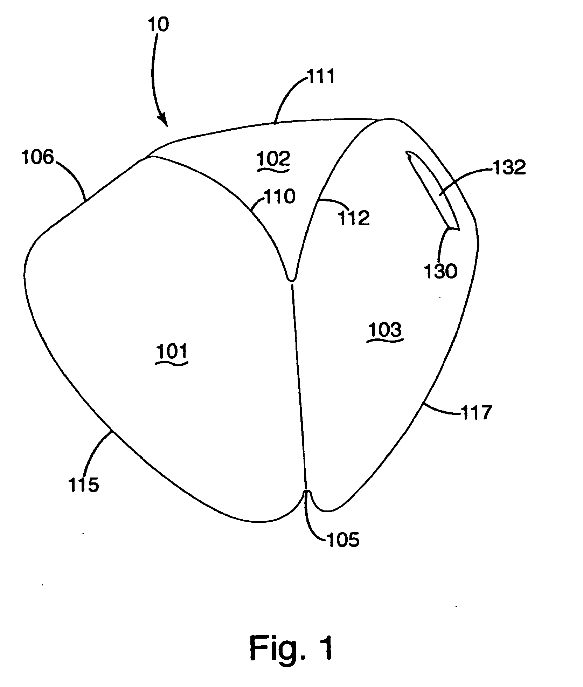

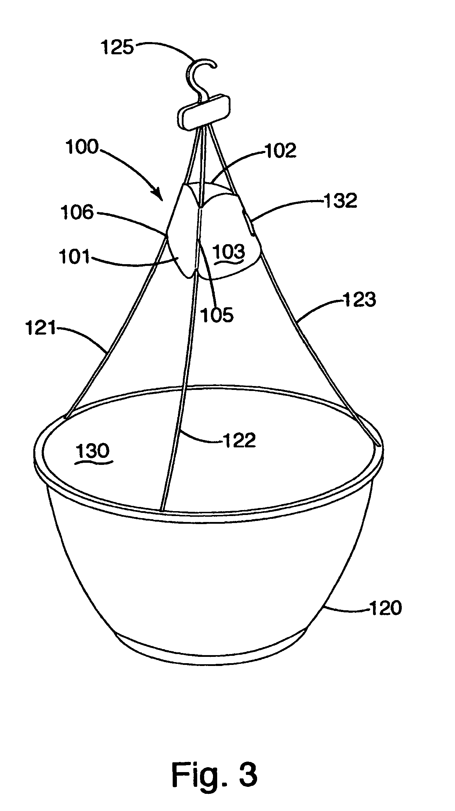

An illustrative embodiment of the invention is shown in FIGS 1 through 3. FIG. 1 is a perspective view of three sided label structure 100 formed from three interconnected label sections, sections 101, 102 and 103. The label structure may be formed of any suitable material common used for labeling plants and the like. The three sided label structure 100 is adapted to be supported on flower basket support wires in a manner generally depicted in FIG. 3. The three separate label sections may each be provided with relevant information about a plant supported in the container 120 of FIG. 3. By way of example, one of the three label sections, e.g. section 101, may recite specific characteristic and pricing information about a plant displayed in the basket, while another label section, e.g. section 102, may display a trademark or trade name and pictorial representation of the plant in full bloom. Further information of interest to a perspective buyer, or such other information as a dealer may whish to display, may be displayed on the third label section, e.g. section 103.

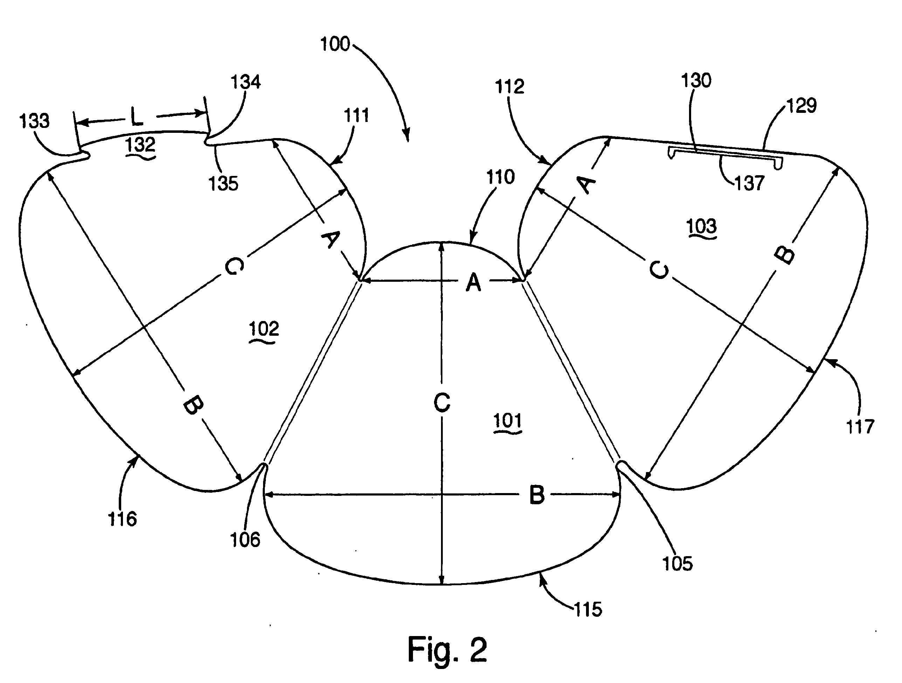

FIG. 2 is a plan view of the label structure 100 prior to being folded in the configuration shown in FIG. 1. As clearly shown in FIG. 2, each of the three sections 101,102 and 103 has a basic triangular form. Upper edges 110, 111 and 112 and lower edges 115, 116 and 117, of the sections 101, 102 and 103, respectively, are preferably rounded for the sake of esthetics. Section 101 and section 103 are joined along a hinge section 105 and sections 101 and 102 are joined along a hinge section 106. The hinge sections are provided to facilitate a bending of the label to form the triangularly shaped label structure depicted in FIG. 1 and FIG. 3. The three label sections 101, 102 and 103 each have an upper cross dimension A, a lower cross dimension B and a longitudinal dimension C. Preferably, the dimensions A, B and C are the same for all three label sections.

The section 102 is provided with a tab 132 for engagement with a slotted opening 130 in section 103. The tab 132 is provided with undercut ends 132 and 134 and the opening 130 is to facilitate insertion of the tap 132 in the slot 130. The overall length L1 of the tab 132 is preferably somewhat greater than the overall length L2 of the slot 130, to maintain the tab 132 in the slot 130.

## Claims

1. A hanging basket having a basket (120) with a circumferentially extending upper rim (125) and at least three support wires (121, 122, 123) extending upwardly from spaced apart positions adjacent the upper rim, and a label collar, **characterised in that** the label collar has first, second and third interconnected label sections (101, 102, 103), each label section having a substantially flat display surface and opposing side edges, the label structure comprising a first hinge section (106) interconnecting the first label section (101) and the second label section (102) and second hinge section (105) interconnecting the first label section (101) and the third label section (103); one of the second and third label sections (102, 103) having a slotted opening (130) and another of the third and second label sections (102, 103) being provided with a tab (132) for engagement with the slotted opening (130), to form a three sided label collar supportable on the at least three support wires (121, 122, 123), at a selected position above the rim
wherein the upper rim of the basket (120) has a predefined diameter and the label sections (101, 102, 103) are dimensioned relative to the predefined diameter of the basket such that the label sections (101, 102, 103) are supported on the support wires (121, 122, 123) at a predetermined distance above the rim (125).

2. The hanging basket and label collar in accordance with claim 1 wherein each of the label sections (101,102, 103) has an upper edge (110, 111, 112) and a lower edge (115, 116, 117) and a first cross dimension (A) at a predefined distance from the upper edge and wherein the cross dimension (A) is the same for each of the label sections (101,102,103).

3. The hanging basket and label collar in accordance with claim 2 and further comprising a lower edge and second cross dimension (B) at a predefined distance from the lower edge and wherein the cross dimension B is the same for each of the label sections (101, 102, 102).

## Patentansprüche

1. Hängekorb mit einem Korb (120), der einen in Umfangsrichtung verlaufenden oberen Rand aufweist, und mindestens drei Haltedrähten (121, 122, 123), die sich von beanstandeten Positionen benachbart des oberen Randes nach oben erstrecken, und einem manschettenförmigen Etikett, **dadurch gekennzeichnet, dass** das manschettenförmige Etikett erste, zweite und dritte, miteinander verbundene Etikettenabschnitte (101, 102, 103) aufweist, jeder Etikettenabschnitt eine im wesentlichen flache Präsentationsfläche sowie gegenüberliegende Seitenkanten hat, die Etikettenstruktur einen ersten Gelenkabschnitt (106) zum Verbinden des ersten Etikettenabschnitts (101) und des zweiten Etikettenabschnitts (102) und einen zweiten Gelenkabschnitt (105) zum Verbinden des ersten Etikettenabschnitts (101) und des dritten Etikettenabschnitts (103) aufweist, einer von dem zweiten und dritten Etikettenabschnitt (102, 103) eine geschlitzte Öffnung (130) hat und der andere von dem dritten und zweiten Etikettenabschnitt (102, 103) mit einem Streifen (132) versehen ist, um mit der geschlitzten Öffnung (130) einzugreifen, um ein manschettenförmiges Etikett mit drei Seitenflächen zu bilden, das an den zumindest drei Haltedrähten (121, 122, 123) in einer ausgewählten Position über dem Rand gehalten werden kann,
wobei der obere Rand des Korbes (120) einen vordefinierten Durchmesser hat und die Etikettenabschnitte (101, 102, 103) relativ zu dem vordefinierten Durchmesser des Korbes so dimensioniert sind, dass die Etikettenabschnitte (101, 102, 103) mit einer vorbestimmten Distanz über dem Rand an den Haltedrähten (121, 122, 123) abstützend gehalten werden.

2. Hängekorb und manschettenförmiges Etikett nach Anspruch 1, wobei jeder der Etikettenabschnitte (101, 102, 103) eine obere Kante (110, 111, 112) und eine untere Kante (115, 116, 117) sowie eine erste Querabmessung (A) mit einer vordefinierten Distanz von der oberen Kante hat, und wobei die Querabmessung (A) für jeden der Etikettenabschnitte (101, 102, 103) gleich ist.

3. Hängekorb und manschettenförmiges Etikett nach Anspruch 2, außerdem mit einer unteren Kante und einer zweiten Querabmessung (B) mit einer vordefinierten Distanz von der unteren Kante, wobei die Querabmessung (B) für jeden der Etikettenabschnitte (101, 102, 103) gleich ist.

## Revendications

1. Corbeille suspendue ayant une corbeille (120) munie d'un rebord supérieur s'étendant circonférentiellement et d'au moins trois fils de support (121, 122, 123) s'étendant vers le haut à partir de positions espacées adjacentes au rebord supérieur, et d'un collier pour étiquette, **caractérisée en ce que** le collier pour étiquette a des premier, deuxième et troisième tronçons pour étiquette reliés mutuellement (101, 102, 103), chaque tronçon pour étiquette ayant une surface d'affichage sensiblement plate et des bords latéraux opposés, la structure pour étiquette comportant un premier tronçon d'articulation (106) reliant mutuellement le premier tronçon pour étiquette (101) et le deuxième tronçon pour étiquette (102), et le second tronçon d'articulation (105) reliant mutuellement le premier tronçon pour étiquette (101) et le troisième tronçon pour étiquette (103), l'un des deuxième et troisième tronçons pour étiquette (102, 103) ayant une ouverture entaillée (130), et un autre des troisième et deuxième tronçons pour étiquette (102, 103) étant muni d'une patte (132) pour une mise en prise avec l'ouverture entaillée (130), afin de former un collier pour étiquette à trois côtés pouvant être supporté sur les au moins trois fils de support (121, 122, 123), dans une position choisie au-dessus du rebord,
dans laquelle le rebord supérieur de la corbeille (120) a un diamètre prédéfini, et les tronçons pour étiquette (101, 102, 103) sont dimensionnés par rapport au diamètre prédéfini de la corbeille, de sorte que les tronçons pour étiquette (101, 102, 103) sont supportés sur les fils de support (121, 122, 123) à une distance prédéterminée au-dessus du rebord.

2. Corbeille suspendue et collier pour étiquette selon la revendication 1, dans lesquels chacun des tronçons pour étiquette (101, 102, 103) a un bord supérieur (110, 111, 112) et un bord inférieur (115, 116, 117), et une première dimension transversale (A) à une distance prédéfinie du bord supérieur, et dans lesquels la dimension transversale (A) est la même pour chacun des tronçons pour étiquette (101, 102, 103).

3. Corbeille suspendue et collier pour étiquette selon la revendication 2, et comportant en outre un bord inférieur et une seconde dimension transversale (B) à une distance prédéfinie du bord inférieur, et dans lesquels la dimension transversale B est la même pour chacun des tronçons pour étiquette (101, 102, 102).
